# EUROPEAN PATENT APPLICATION

(11) **EP 3 379 443 A1**
(43) Date of publication of application: **26.09.2018**
(21) Application number: 17162832.4
(22) Date of filing: 24.03.2017
(51) Int. Cl.: G06F 21/56

(54) **METHOD AND COMPUTER DEVICE TO DEOBFUSCATE A SOURCE CODE**

(71) Applicant: CSPi GmbH, 50825 Köln (DE)
(72) Inventor: Rosenkranz, Sebastian, 51674 Wiehl (DE)
(74) Representative: Maikowski & Ninnemann Patentanwälte Partnerschaft mbB

(57) **Abstract**

A method to deobfuscate a source code (S1) using a computer device (4), comprises steps of obtaining, based on the source code (S1) to be deobfuscated, a representation of the source code (A), the source code (S1) comprising at least one of static constructs and dynamic constructs, and deobfuscating, by a deobfuscation unit (1) of the computer device (4), the source code (S1) using the representation of the source code (A). Herein, said deobfuscating includes: examining, by the deobfuscation unit (1), in a detection step (10) the representation of the source code (A) to detect at least one static construct within the representation of the source code (A); if at least one static construct is detected in the representation of the source code (A), modifying, by the deobfuscation unit (1), in a modification step (11, 12) the at least one static construct according to a predefined ruleset (110, 120) to obtain a modified representation of the source code (A); and outputting, based on the modified representation of the source code (A), the deobfuscated source code (S2). In this way a method is provided to deobfuscate a source code using a computer device which allows for a reliable and automatic deobfuscation of a sample of a source code.

## Description

The invention relates to a method to deobfuscate a source code using a computer device according to the preamble of claim 1, to a computer device constituted to deobfuscate a source code, to a computer program production implementing a method to deobfuscate a source code and a storage medium storing a computer program product.

A method of this kind serves to deobfuscate a source code. The process of deobfuscation is understood as converting a source code that is difficult to understand into one that is simple, understandable and straightforward. Generally, malicious software (also called malware) may make use of obfuscation techniques in which source code is obfuscated by adding expressions in the source code to compose statements in order to deliberately obfuscate the code to conceal its true purpose and/or logic. In that way software may carry code which is obfuscated such that its true purpose and logic is hidden and cannot be detected easily by, e.g., a human analyzer or an antivirus software.

For this purpose, there is a desire to be able to efficiently and reliably deobfuscate source code to be able to determine code which potentially may implement an undesired logic.

For example, in an article by G. Blanc et al., "Characterizing obfuscated JavaScript using abstract syntax trees: experimenting with malicious scripts", in 26th International Conference on Advanced Information Networking and Applications Workshops, 2012 it is disclosed to detect obfuscation making use of a representation of the source code in the shape of an abstract syntax tree. Based on a database of abstract-syntax-tree fingerprints a sample of source code is searched for structures resembling known fingerprints in order to detect potentially obfuscated code portions.

In an article by S. Udupa et al., "Deobfuscation: reverse engineering obfuscated code", in 12th Working Conference on Reverse Engineering, 2005 it is proposed to analyze static and dynamic constructs within a source code in order to reverse engineer an obfuscated code for the purpose of deobfuscation.

US 2009/0064118 A discloses a system and a method that enable automated deobfuscation of software. A method may include identifying at least one section of target software matching trigger criteria, either by using pattern matching or behavior analysis; emulating at least a portion of the identified section; and generating deobfuscated software by substituting a simplified section for the identified section.

Generally, a source code comprises static constructs and dynamic constructs. Herein, static constructs are understood as constructs in the source code which make use only of information contained in the source code itself. In contrast, dynamic constructs are understood as constructs in the source code which make use of runtime information not contained in the source code itself, but obtained during execution of the source code from additional sources outside of the source code. A static construct may for example be a binary expression (for example "4+5") which immediately can be evaluated based on the information contained in the source code (in the example "4+5" equals "9"). In contrast, static constructs can only be evaluated at runtime because a dynamic construct requires runtime information relating for example to the downloading of external code or the use of dynamic system functions.

There is a desire for a deobfuscation technique which reliably is able to deobfuscate source code in order to allow for a detection of for example potentially infected portions of a software. Beneficially, such technique should release a human analyzer from having to provide input for deobfuscation, but should provide a readily deobfuscated source code which immediately can be used for example for a malware detection.

It is an object of the instant invention to provide a method to deobfuscate a source code, a computer device, a computer program product and a storage medium comprising such computer program product which allow for a reliable and automatable deobfuscation of a sample of a source code.

This object is achieved by a method comprising the features of claim 1.

Accordingly, within the method a deobfuscation is carried out including
- examining, by the deobfuscation unit, in a detection step the representation of the source code to detect at least one static construct within the representation of the source code,
- if at least one static construct is detected in the representation of the source code, modifying, by the deobfuscation unit, in a modification step the at least one static construct according to a predefined ruleset to obtain a modified representation of the source code, and
- outputting, based on the modified representation of the source code, the deobfuscated source code.

The instant invention sets out from the finding that substantial obfuscation techniques make use of a static obfuscation in which static expressions are added to source code to compose statements and to in that way conceal a true purpose and logic of the source code. Because such static constructs can be evaluated based on information contained in the source code itself, it is assumed that it is possible to pre-process a source code and, during the pre-processing, to evaluate all static expressions such that the source code is reduced to its non-modifiable static content and its dynamic content. If the source code is reduced in this way, all static obfuscation is removed such that a deobfuscated source code free from static obfuscation statements is obtained.

During the obfuscation, in a detection step the representation of the source code is examined to detect a static construct, i.e., a static expression. For example, such static expression may be a binary expression (e.g., "4+5"), which is static because it can be evaluated based on information contained in the source code itself. If such a static construct is found in the representation of the source code, in a modification step the static construct is modified and, by the modification, simplified. In the preceding example, the binary expression "4+5" may for example be evaluated to be equal to "9", such that the binary expression may be replaced by its result, which is "9".

The detection step and the modification step, in one embodiment, beneficially are repeated such that an iterative modification loop is obtained. Herein, if during the detection step a static construct is detected, during the modification step the static construct is modified for example by replacing it by an equivalent, by executing it or by deleting it. In this way a modified representation of the source code is obtained, which is fed into the subsequent detection step of the next run through the modification loop. If during this detection step another static construct is found in the representation of the source code, the static construct is modified during the subsequent modification step to obtain an again modified representation of the source code.

The modification loop may be repeated until it is found that no further modification of the representation of the source code takes place. This means that no further static construct can be detected within the representation of the source code such that no further modification takes place. In this case the modification loop terminates, and the modified representation of the source code obtained after termination of the modification loop forms the basis for outputting the desired, obfuscated source code.

The deobfuscation, in one aspect, takes place making use of a representation of the source code in the shape of an abstract syntax tree. For this, prior to the deobfuscation, an interpretation unit is used to translate the source code to be deobfuscated into an abstract syntax tree which represents a functional equivalent to the source code. By means of the abstract syntax tree the abstract syntactic structure of the source code (which is written in specific programming language, for example JavaScript) is represented. The abstract syntax tree is obtained by analyzing the syntax of the source code, as it is done for example typically in compilers.

Within an abstract syntax tree, each node of the tree denotes a construct occurring in the source code. For example, in a binary expression "4+5" the operator "+" relates to the node, and the operands "4" and "5" represent branches (leafs) of the node. By translating the source code into the abstract syntax tree, a generic, abstract structure is obtained which can be analyzed by the deobfuscation unit in order to detect static constructs within the source code and to modify detected static constructs in order to deobfuscate the source code.

The analysis of the abstract syntax tree in particular may take place in a post-order approach by stepping through the tree from bottom to top and by considering for example a left leaf before a right leaf.

The detection of static constructs may take place according to a predefined ruleset for the detection. An example of such a detection rule may for example relate to a static binary expression. If it is found that a left and right operand of a binary expression is static, it can be concluded that also the overall binary expression is static (the binary expression "4+5" is static because both operands "4", "5" are static). In another example, a block statement comprising an arbitrarily large collection of statements may be assumed to be static if all statements are static. In yet another example, an empty statement may always be assumed static because it does not represent any instruction. In yet another example, a literal being a constant sequence of letters or numbers within a code is always assumed static.

Based on the static ruleset, static constructs within the representation of the source code, in particular the abstract syntax tree, may be detected.

In one embodiment, also the modification takes place making use of a predefined ruleset. The predefined ruleset comprises rules governing the modification of the detected static constructs. Herein, different rules may exist, the rules for example relating to the execution of a node or a subtree of the abstract syntax tree to replace the node or subtree by the return value of the execution. Alternatively or in addition, the rules may relate to the replacement of a node or a subtree of the abstract syntax tree by an equivalent node or subtree. Alternatively or in addition, the rules may relate to the deletion of a node or a subtree of the abstract syntax tree.

In one embodiment, the modification step may be divided into a first modification step and a second modification step, the first modification step making use of a first, simple ruleset and the second modification step making use of a second, complex ruleset. The first ruleset may include rules applicable to a node or a subtree of the abstract syntax tree, hence allowing to immediately replace the node or subtree within the representation of the source code. The second, complex ruleset in turn may include rules applicable to at least two distinct nodes or subtrees of the abstract syntax tree. For example, the rules of the second ruleset may relate to and may make use of the entire abstract syntax tree. A complex static construct hence may not be immediately detected within the abstract syntax tree, but only after one or multiple runs through the entire abstract syntax tree.

An example of a rule of the first, simple ruleset may for example be the evaluation of a binary expression (e.g., "4+5"), which may immediately be replaced by its result ("9"). An example of a rule of the second, complex ruleset may be whether a variable is unused in the source code, which can be detected only after a complete run through the entire representation of the source code.

Both the first, simple ruleset and the second, complex ruleset may comprise replacement rules relating to the replacement of constructs, execution rules relating to the execution of constructs and deletion rules relating to the deletion of constructs.

After the modification loop is completed, i.e., when no further static constructs are found within the representation of the source code that can be further modified (i.e., no further rule for a modification exists), the deobfuscated source code shall be output. For this, the modified representation of the source code, in one aspect, is translated back from its abstract representation into the programming language of the source code, and in this shape the obfuscated source code is output by the deobfuscation unit. The deobfuscated source code may then be further analyzed with respect to a potential malware, which may easily be analyzed and interpreted for its logic based on the deobfuscated source code.

The programming language of the source code may for example be JavaScript. It however is also conceivable that the source code makes use of another programming language, such as C/C++.

The object is also achieved by a computer device constituted to deobfuscate a source code, comprising a deobfuscation unit constituted to deobfuscate a source code using a representation of the source code obtained based on the source code to be deobfuscated, the source code comprising at least one of static constructs and dynamic constructs. The deobfuscation unit is constituted to
- examine in a detection step the representation of the source code to detect at least one static construct within the representation of the source code,
- modify, if at least one static construct is detected in the representation of the source code, in a modification step the at least one static construct according to a predefined ruleset to obtain a modified representation of the source code, and
- output, based on the modified representation of the source code, the deobfuscated source code.

The object is also achieved by a computer program product implementing a method as described above.

The object is also achieved by a storage medium storing a computer program product.

The idea underlying the invention shall subsequently be described in more detail with reference to the embodiments shown in the figures. Herein:
- Fig. 1: shows a schematic view of a computer device implementing a method to deobfuscate a source code;
- Fig. 2: shows a schematic flow chart of a method for deobfuscating a source code;
- Fig. 3A: shows an example of an expression of a source code in an obfuscated state;
- Fig. 3B: shows the representation of the source code after a first modification run;
- Fig. 3C: shows the representation of the source code after a second modification run;
- Fig. 3D: shows the representation of the source code after a third modification run;
- Fig. 3E: shows the result after deobfuscation;
- Fig. 4: shows another example of a deobfuscation of an expression of a source code;
- Fig. 5A-5C: show a sample of an obfuscated source code; and
- Fig. 6: shows the source code sample of Fig. 5A-5C after deobfuscation.

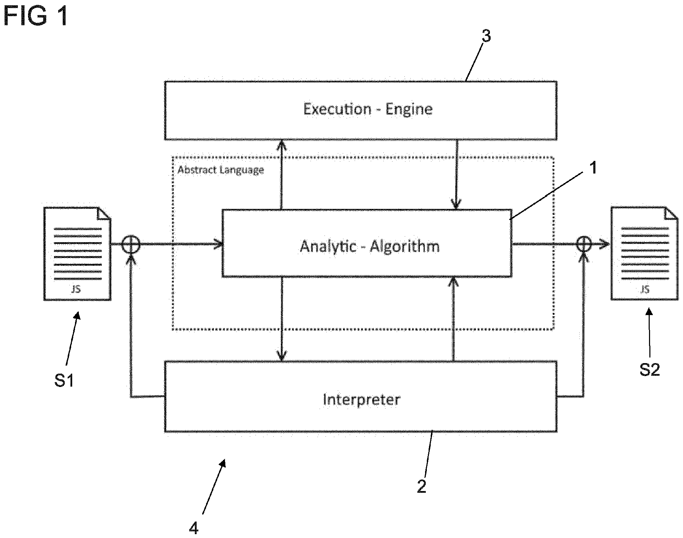

Fig. 1 shows in a schematic view a setup as it may be used for deobfuscating obfuscated source code S1 to obtain deobfuscated source code S2.

The setup may be implemented by software on a computer device 4, such as a personal computer or the like.

Within the setup, obfuscated source code S1 is fed into a deobfuscation unit 1, which serves to analyze the source code S1, to deobfuscate it and to output deobfuscated source code S2. Within the context of obfuscation, new statements composed of expressions, or new expressions within statements or expressions, may have been added to the source code S1 to conceal a purpose and logic of the source code S1 in order to for example hide a malicious behavior of the source code S1. By the deobfuscation, obfuscated source code S1 shall be converted into a shape in which its purpose and logic is recognizable such that the source code, in deobfuscated form S2, can be analyzed for example to detect malware.

In the setup, the deobfuscation unit 1 interacts with an interpretation unit 2 and an execution unit 3. The interpretation unit 2 serves to translate the obfuscated source code S1 into a representation which can easily and efficiently be handled by the deobfuscation unit 1. After deobfuscation, the deobfuscated representation of the source code output by the deobfuscation unit 1 is retransmitted into the programming language of the source code S1 by means of the interpretation unit 2 and output as the deobfuscated source code S2. The execution unit 3 serves to, potentially, execute portions of the source code during analysis of the source code by the deobfuscation unit 1, for example if the source code calls external functions which need to be executed in order to obtain a return value in the context of the analysis.

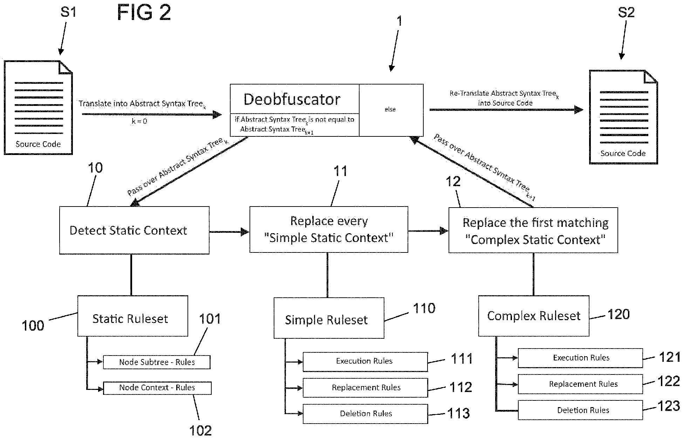

The deobfuscation unit 1 deobfuscates the source code S1 by iteratively analyzing and modifying the source code S1, as it is illustrated in a schematic flow chart in Fig. 2.

The deobfuscation unit 1 operates on a representation of the obfuscated source code S1 in the shape of an abstract syntax tree. For this, the source code S1 is translated into an abstract syntax tree by means of the interpretation unit 2, which then is fed into the deobfuscation unit 1. After deobfuscation, the interpretation unit 2 translates the output representation of the source code back into the programming language of the source code and outputs a deobfuscated version of the source code S2.

The programming language of the source code S1, S2 may for example be JavaScript, wherein it is conceivable to apply the approach described herein also to other programming languages, such as for example C/C++.

Within the deobfuscation unit 1, a modification loop is formed, in the context of which static constructs in the representation of the source code are detected in a detection step 10 and are modified in modification steps 11, 12. After the modification of the representation of the source code in the modification steps 11, 12, the now modified representation of the source code is passed back to the root of the deobfuscation unit 1, in which it is checked whether a further run through the modification loop is necessary, in case of which the modification loop starts anew.

Within the detection step 10, static constructs, e.g., static statements including static expressions, within the representation of the source code are detected. This takes place by applying a static ruleset 100 comprising rules 101, 102 according to which it can be determined whether a construct of the source code is static or not. Within a so-called node-subtree rule 101 it may for example be checked whether all leafs of a node of the tree are static, in which case it can be assumed that the node itself is static. Within a so-called node-context rule 102 a node is examined in the context of a portion of the tree or the entire tree.

In the detection step 10, hence, static constructs within the representation of the source code are identified. The deobfuscation unit 1 shall act onto those static constructs in order to pre-process the static constructs and to potentially modify the static constructs in order to simplify them and to in this way remove obfuscation from the source code.

The modification of the source code takes place into modification steps 11, 12, a first modification step 11 applying a simple ruleset 110 and a second modification step 12 applying a complex ruleset 120.

Within the simple ruleset 110 applied in the first modification step 11, nodes or subtrees of the abstract syntax tree are modified. In the context of the simple ruleset 110, execution rules 111, replacement rules 112 and deletion rules 113 exist which cause an execution of an instruction associated with a node or subtree, a replacement of a node or subtree, or a deletion of a node or subtree. The rules 111-113 of the simple ruleset 110 act onto the node or the subtree itself and cause an execution, replacement or deletion within the node or subtree.

In particular, an execution rule 111 causes an instruction associated with a node or a subtree of the abstract syntax tree to be executed and replaces the node or subtree by the return value of the instruction. An example of an execution rule may for example be the execution of a binary expression ("4+5"), which is executed and replaced by its result ("9"). Another example may be the execution of a logical expression, for example "true II console.log("hello")", which can be replaced by "true" because it always has the value "true".

A replacement rule 112 replaces a node or subtree by an equivalent node or subtree. The equivalence is determined by the equality of the results of the instructions of the original node or subtree and the replacing node or subtree. An example for a replacement rule 112 may for example be an update expression such as "++i", which is for example replaced by the equivalent expression "i=i+1".

A deletion rule 113 causes the deletion of for example a useless expression. If for example it is found that an expression consists only of a literal or an identifier not having an impact during execution of the source code, the expression can be deleted.

Within a modification loop of the deobfuscation unit 1, multiple simple static constructs may be modified at a time according to the simple ruleset 110 by applying the rules 111-113.

In the second modification step 12 a complex ruleset 120 is applied also containing execution rules 121, replacement rules 122 and deletion rules 123. The context ruleset 120, in contrast to the simple ruleset 110, however may comprise rules 121-123 which may act onto the entire abstract syntax tree and hence may lead to a modification of the entire abstract syntax tree. The rules 121, 122, 123 of the complex ruleset 120 hence do not cause a modification only of a node or subtree, but may cause modifications on multiple distinct nodes or subtrees.

An example of an execution rule 121 is for example a function call calling a function defined elsewhere in the code, the function call being replaceable by the (static) return value of the function call. An example of a replacement rule 122 is the replacement of a sequence expression by a simpler sequence expression. An example of a deletion rule is the deletion of an unused identifier throughout the code.

Within the deobfuscation unit 1, it is stepped through the modification loop defined by the detection step 10 and the modification steps 11, 12 until it is found that a run through the modification loop does not cause a further modification of the representation of the source code. In this case it can be assumed that no further static constructs are present that can be further modified (i.e., no rules for a further modification of the still present static constructs exist) within the representation of the source code, such that the modification loop can be terminated and the modified representation of the source code may be re-translated by the interpretation unit 2 and may be output as the deobfuscated source code S2.

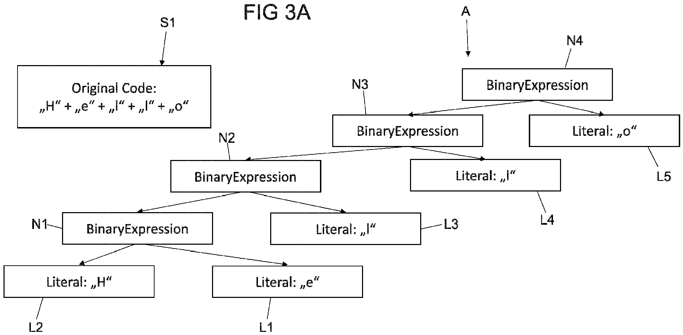

An example of an iterative modification of a representation of a source code in the shape of an abstract syntax tree A is shown in Fig. 3A to 3E.

At the start of the deobfuscation, the source code S1 is present in the shape "H"+"e"+"l"+"l"+"o", as shown in Fig. 3A. This source code S1 is translated by the interpretation unit 2 into an abstract syntax tree A as illustrated in Fig. 3A, comprising nodes N1-N4 and leafs L1-L5 associated with the nodes N1-N4.

For the deobfuscation it is stepped through the abstract syntax tree A in a post-order scheme by stepping through the syntax tree A from bottom to top. It hence is started with the bottom leafs L1, L2 connected by the node N1.

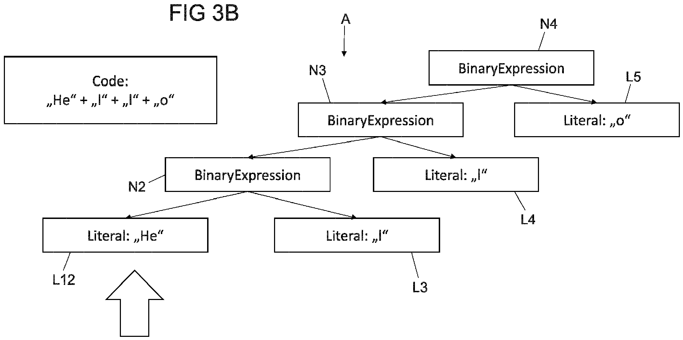

Within the modification loop it is first checked whether a node N1 in question can be assumed to be static (detection step 10 in Fig. 2). In the example this is the case, because the leafs L1, L2 associated with the node N1 both represent literals ("H", "e") and hence are static as the result does not depend on runtime information. By applying an execution rule 111 of the simple ruleset 110 in the first modification step 11, the binary expression of the node N1 is executed and replaced by its result (literal "He"), as this is shown in Fig. 3B (leaf L12).

This completes, in this example, the run through the modification loop, upon which it is checked whether the run has caused a modification of the abstract syntax tree A. This is the case here, such that a new run through the modification loop is started.

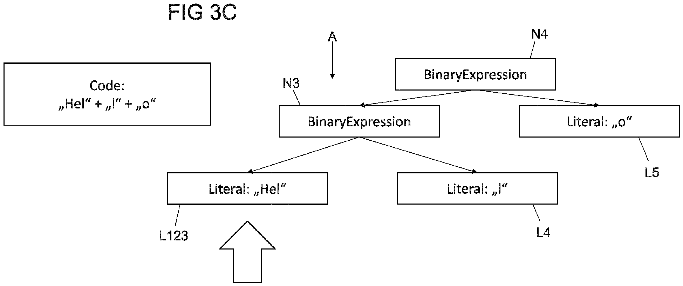

In the next run it is checked whether the binary expression of the bottom node N2 is static, which is the case because the leafs L3, L12 both are static. The binary expression of the node N2 hence is executed and replaced by its result, which is the literal "Hel" as illustrated in Fig. 3C (leaf L123).

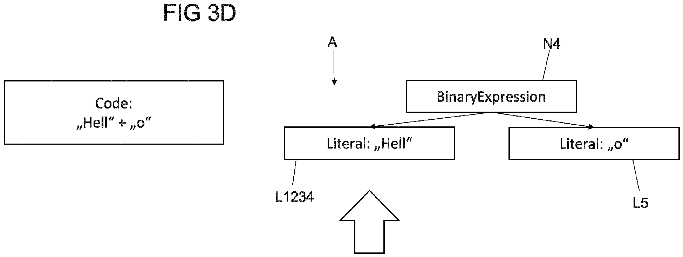

Because the run through the modification loop again caused a modification of the abstract syntax tree A, another run is started, in which now node N3 is examined and is assumed static because the leafs L4, L123 are both static, such that the binary expression of the node N3 can be executed and replaced by its result ("Hell"), as shown in Fig. 3D (leaf L1234).

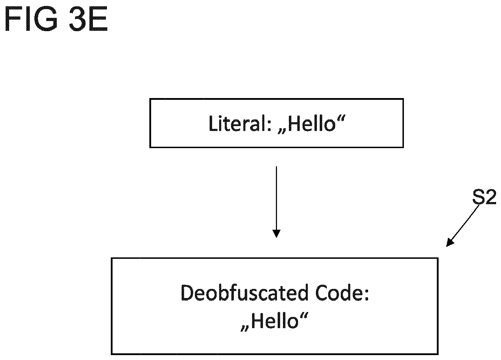

In yet another run, now the top node N4 is examined and found to be static because the leafs L5, L1234 are static. By executing the binary expression of the node N4 and by replacing the binary expression by its result ("Hello") as illustrated in Fig. 3E, the abstract syntax tree A is reduced to a single node, which can be retranslated and can be output as the deobfuscated source code S2 ("Hello").

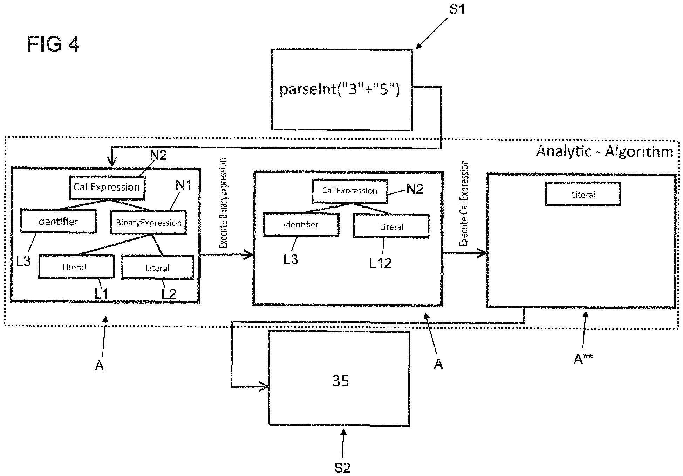

Fig. 4 shows another example in which a statement parselnt("3"+"5") of a source code S1 is translated into an abstract syntax tree A, which is iteratively modified applying the modification loop of Fig. 2 by applying an execution rule 111 to execute a binary expression (node N1 with leafs L1, L2) and an execution rule 121 to call an expression (node N2 with leafs L3, L12) to obtain literal "35", which can be returned as the deobfuscated source code S2.

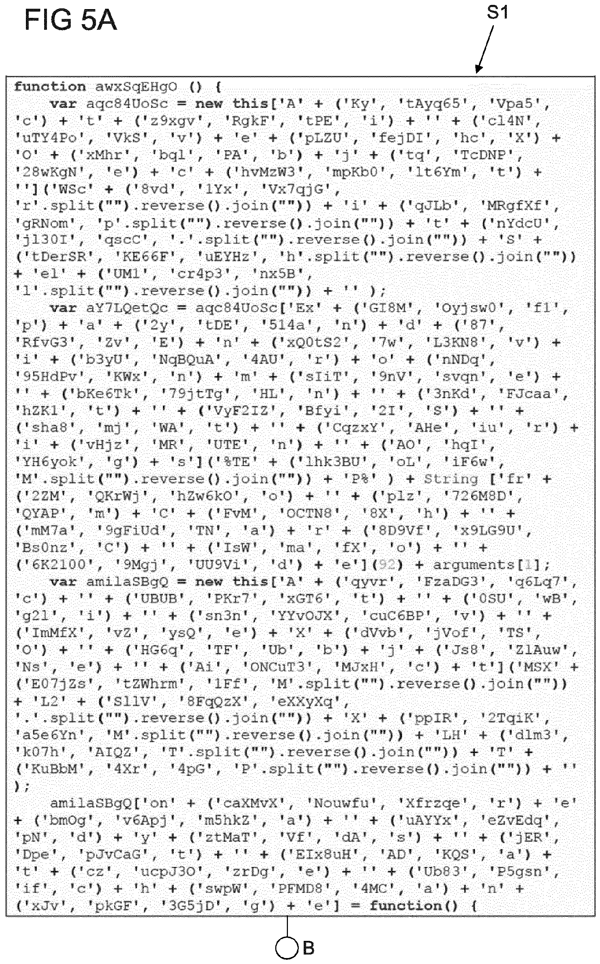

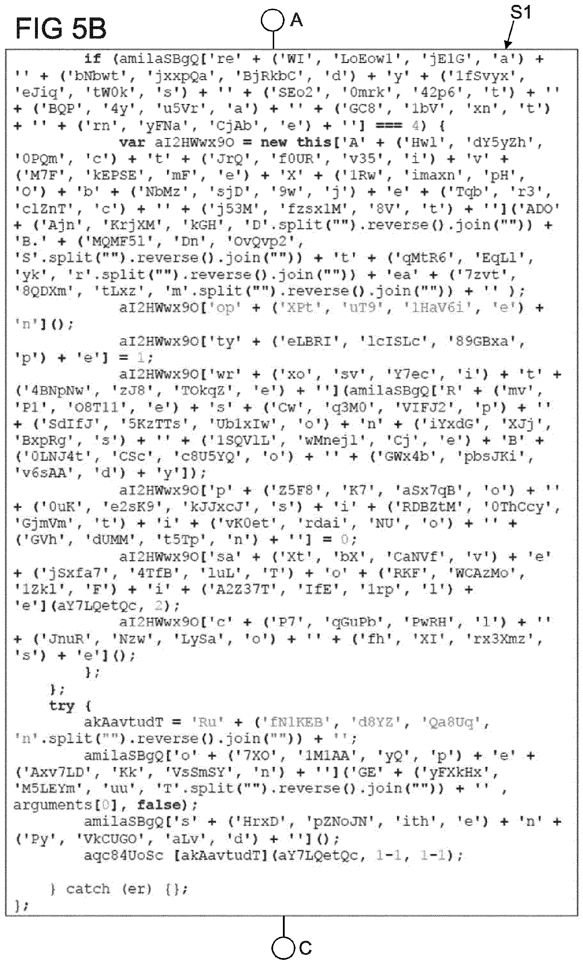

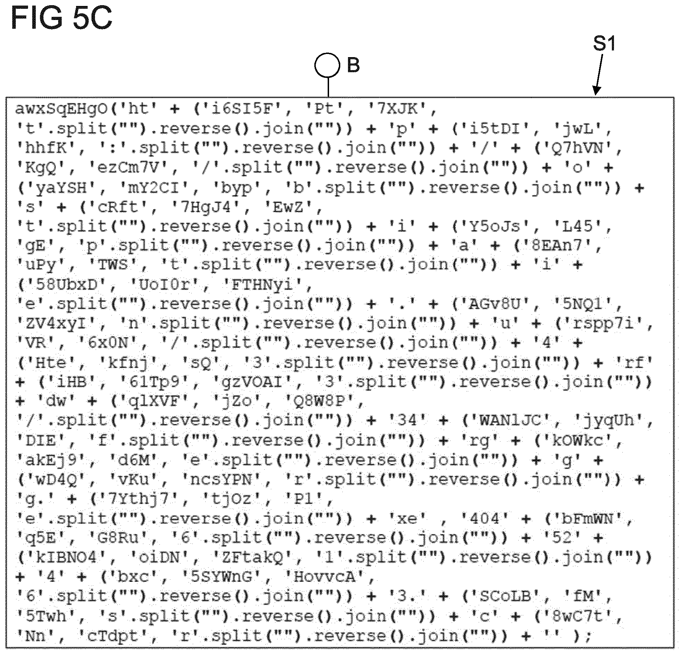

Fig. 5A-5C show an example of an obfuscated source code S1. Fig. 5A-5C herein are to be viewed in combination: Fig. 5A shows a first portion of the source code S1, which is adjoined by the portion of the source code S1 of Fig. 5B, which again is adjoined by the portion of the source code S1 shown in Fig. 5C.

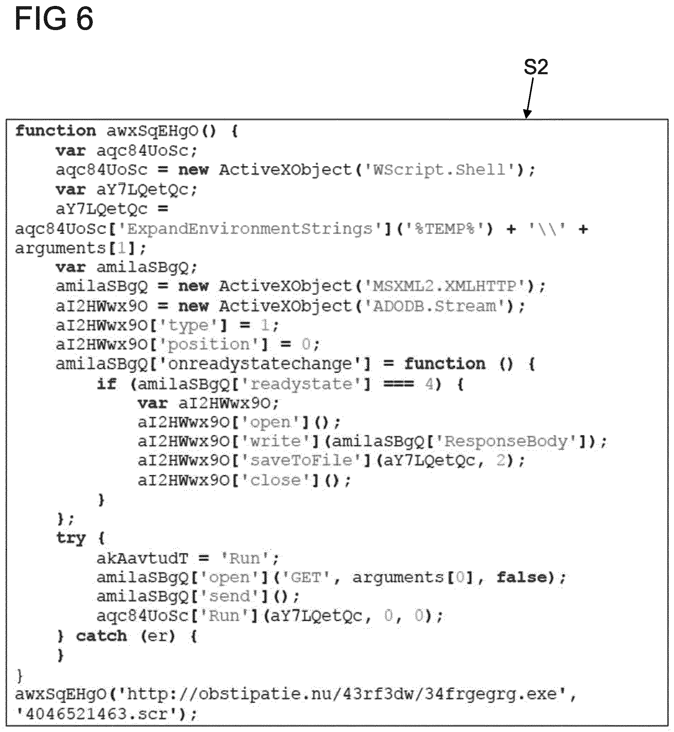

Fig. 6 shows the source code S2 of Fig. 5A-5C after deobfuscation. Whereas the source code S1 in its obfuscated shape is hardly readable and interpretable, the source code S2 after deobfuscation can easily be analyzed and interpreted to identify a potential malicious behavior. In the illustrated example, the source code S2 for example comprises a call to an external executable file (.exe) in the last two lines of the deobfuscated source code S2, which may hint at a malicious behavior and hence can be identified and potentially blocked.

The idea of the invention is not limited to the embodiments described above, but may be implemented in an entirely different fashion.

In particular, a deobfuscation approach as described herein may be applied to source code making use of the JavaScript programming language. However, the same or a similar approach may also be used to source code of another programming language.

Rules for identifying static constructs as well as for modifying static constructs are given herein, wherein other rules may exist which may be used to identify static constructs and to execute, replace or delete static constructs.

The scheme proposed herein may be fully implemented in software, wherein it is also conceivable to provide a distinct computing unit which may be optimized to efficiently execute a deobfuscation scheme as proposed herein.

### List of reference numerals

- 1: Deobfuscation unit
- 10: Detection step
- 100: Static ruleset
- 101, 102: Rules
- 11: First modification step
- 110: Simple ruleset
- 111-113: Rules
- 12: Second modification step
- 120: Complex ruleset
- 121-123: Rules
- 2: Interpretation unit
- 3: Execution unit
- 4: Computer device
- A: Representation of the source code (abstract syntax tree)
- L1-L5, L12, L123, L1234: Leaf
- N1-N4: Node
- S1: Source code
- S2: Deobfuscated source code

## Claims

1. Method to deobfuscate a source code (S1) using a computer device (4), comprising:
- obtaining, based on the source code (S1) to be deobfuscated, a representation of the source code (A), the source code (S1) comprising at least one of static constructs and dynamic constructs, and
- deobfuscating, by a deobfuscation unit (1) of the computer device (4), the source code (S1) using the representation of the source code (A),
**characterized in**
**that** said deobfuscating includes
- examining, by the deobfuscation unit (1), in a detection step (10) the representation of the source code (A) to detect at least one static construct within the representation of the source code (A),
- if at least one static construct is detected in the representation of the source code (A), modifying, by the deobfuscation unit (1), in a modification step (11, 12) the at least one static construct according to a predefined ruleset (110, 120) to obtain a modified representation of the source code (A), and
- outputting, based on the modified representation of the source code (A), the deobfuscated source code (S2).

2. Method according to claim 1, **characterized by** repeating, by the deobfuscation unit (1), in a modification loop said detection step (10) and said modification step (11, 12) using the modified representation of the source code (A) as input for the subsequent detection step (10).

3. Method according to claim 2, **characterized by** stopping said modification loop if it is found that the representation of the source code (A) prior to the detection step (10) and the modified representation of the source code (A) obtained after the modification step (11, 12) following the detection set (10) are identical to each other.

4. Method according to one of claims 1 to 3, **characterized by** translating, using an interpretation unit (2), the source code (S1) to be deobfuscated into an abstract syntax tree to obtain said representation of the source code (A), the abstract syntax tree comprising an arrangement of nodes (N1-N4), each node (N1-N4) relating to a static construct of the source code (S1) or a dynamic construct of the source code (S1) and comprising at least two leafs (L1-L5).

5. Method according to claim 4, **characterized in that** the modification step (11, 12) includes at least one of
- executing a node or a sub-tree of the abstract syntax tree and replacing the node or sub-tree by the return value of the execution,
- replacing a node or a sub-tree of the abstract syntax tree by an equivalent node or sub-tree, and
- deleting a node or a sub-tree of the abstract syntax tree.

6. Method according to claim 4 or 5, **characterized in that** the modification step includes a first modification step (11), in which at least one static construct is modified according to a predefined first ruleset (110), and a second modification step (12), in which at least one static construct is modified according to a predefined second ruleset (120).

7. Method according to claim 6, **characterized in that** the first ruleset (110) includes rules (111-113) applicable to a node or a sub-tree of the abstract syntax tree, whereas the second ruleset (120) includes rules (121-123) applicable to at least two distinct nodes or sub-trees.

8. Method according to one of the preceding claims, **characterized by** translating, using the interpretation unit (2), the modified representation of the source code (A) to obtain the deobfuscated source code (S2).

9. Computer device (4) constituted to deobfuscate a source code (S1), comprising:
- a deobfuscation unit (1) constituted to deobfuscate a source code (S1) using a representation of the source code (A) obtained based on the source code (S1) to be deobfuscated, the source code (S1) comprising at least one of static constructs and dynamic constructs,
**characterized in**
**that** the deobfuscation unit (1) is constituted to
- examine in a detection step (10) the representation of the source code (A) to detect at least one static construct within the representation of the source code (A),
- modify, if at least one static construct is detected in the representation of the source code (A), in a modification step (11, 12) the at least one static construct according to a predefined ruleset (110, 120) to obtain a modified representation of the source code (A), and
- output, based on the modified representation of the source code (A), the deobfuscated source code (S2).

10. Computer program product implementing a method according to one of claims 1 to 8.

11. Storage medium storing a computer program product according to claim 10.
